# EUROPEAN PATENT SPECIFICATION

(11) **EP 1 529 670 B1**
(45) Date of publication and mention of the grant of the patent: **11.03.2009**
(21) Application number: 04078023.1
(22) Date of filing: 03.11.2004
(51) Int. Cl.: B60J 5/04, B62D 65/00

(54) **Vehicle door frame and method for manufacturing the same**
Fahrzeugtürrahmen und Verfahren zu seiner Herstellung
Cadre de porte de véhicule et procédé pour son fabrication

(30) Priority: 07.11.2003 JP 2003378790
(43) Date of publication of application: 11.05.2005
(73) Proprietor: AISIN SEIKI KABUSHIKI KAISHA, Kariya-shi, Aichi-ken 448-8650 (JP)
(72) Inventor: Masunaga, Satoshi c/o Intellectual Property Dept., Kariya-shi, Aichi-ken 448-8650 (JP)
(74) Representative: Marshall, John Grahame

(56) References cited:
- EP-A- 1 029 729
- DE-A1- 10 043 325
- DE-A1- 10 201 203
- DE-A1- 19 925 521
- PATENT ABSTRACTS OF JAPAN vol. 2002, no. 09, 4 September 2002 (2002-09-04) & JP 2002 127749 A (AISIN SEIKI CO LTD; KANTO AUTO WORKS LTD), 8 May 2002 (2002-05-08)

## Description

### FIELD OF THE INVENTION

This invention generally relates to vehicle door frames and a method for manufacturing the same.

### BACKGROUND

A known method for manufacturing a vehicle door frame, disclosed in JP2002127749A, includes an elongated member forming process, a liner inserting process, a first bending process, a notch portion forming process, a second bending process and a vehicle door frame finishing process. In the elongated member forming process, an elongated member, having a hollow main body and a flange portion such that the member has a predetermined cross section, is made of a sheet material. In the liner inserting process, a liner is inserted into the hollow main body of the elongated member up to a predetermined position along its length. In the first bending process, the elongated member is bent at the predetermined position along its length where the liner is inserted, thereby forming a bent portion with a large radius of curvature (e.g. a radius of curvature greater than or equal to 110 mm). In the notch portion forming process, the flange portion of the elongated member is trimmed off along this bent portion, thereby forming a notch portion. In the second bending process, the bent portion of the elongated member is further bent to a smaller radius of curvature (e.g. a radius of curvature from 20 mm to 50 mm). Finally, in the vehicle door frame finishing process, a bracket is fixed into the notch portion. In this way a vehicle door frame is manufactured.

Specifically in the first bending process, the elongated member is pressed, by an applied force, to a bender which has a large radius of curvature so as to form a bent portion with a corresponding large radius of curvature. The bent portion is formed with the hollow main body is directly in contact with the bender and such that the flange portion of the elongated member forms the outer edge of the bent portion. Importantly the bent portion is formed without harming the cross sectional shape of the hollow main body or flange portion.

Subsequently in the notch portion forming process, the flange portion of the elongated member is trimmed off along a length of the elongated member which includes the bent portion, thereby forming said notch portion. Said notch portion prevents the remaining flange portions of the elongated member from being damaged by any subsequent bending processes applied to the bent portion and thereby facilitates further bending of the bent portion to a smaller radius of curvature in the second bending process. This is because the bent portion of the elongated member will now only consist of the hollow main body, the flange portion having been trimmed off along this length.

In the second bending process, the elongated member is firmly fixed, by clamps, over a significant length of the elongated member either side of the bent portion without harming the cross sectional shape of the elongated member. A force is then applied to the fixed portions of the elongated member so as to further bend the bent portion to a smaller radius of curvature.

Finally, in the vehicle door frame finishing process, an additional flange member is fitted into the notch portion of the elongated member, which now includes a bent portion with a small radius of curvature. In this way, a bent portion with a small radius of curvature may be formed in a vehicle door frame in stages, for example first and second bending processes. The ability of the above method to form bent portions with small radii of curvatures has provided greater freedom in the design of vehicle door frames

According to the structure of the elongated member and the bending orientation involved in this process the flange portion would fracture if it experienced the force need to bend the intact elongated member below a certain limiting radius of curvature. This limiting radius of curvature is greater than those normally produced in the second bending process. Thus, in the first bending process of the known manufacturing process, the elongated member is pressed to the bender in such a manner that it does not experience a force at which the flange portion would fracture, the bender having a curved shape with a large radius of curvature. Thus a bent portion with a large radius of curvature (e.g. a radius of curvature greater than or equal to 110mm) is formed in the elongated member.

In the second bending process of the known manufacturing process, a bent portion with a small radius of curvature is easily formed from the bent portion with a large radius of curvature by bending only the hollow main body of the elongated member. This is because the notch portion is provided at the bent portion formed in the first bending process by trimming off the flange portion along this length of the elongated member. To bend such a hollow main body, a force smaller than the force required in the first bending process is needed. Thus, a bent portion with a small radius of curvature (e.g. a radius of curvature from 20 to 50mm) is formed in the elongated member.

In such a method of manufacturing a vehicle door frame, the elongated member is bent in two stages, namely the first and the second bending processes. The force applied to the elongated member in each stage is different due to the differing structures being bent and the different radii of curvatures produced. This complicates the operation at each stage. Thus the cost of manufacturing a vehicle door frame is increased.

In addition, according to the known manufacturing method, in the second bending process each end of the elongated member must be firmly secured, by a clamp or clamps, over a significant length in order to form a bent portion with a small radius of curvature. Each secured portion of the elongated member must be at least a certain minimum length. Therefore a bent portion with a small radius of curvature can only be formed at positions which are said minimum length away from either end of the elongated member. For this reason the freedom in the design of door frames is restricted by the use of such a manufacturing method.

Thus, a need exists for a method for manufacturing a vehicle door frame which can form a bent portion with a small radius of curvature whilst reducing manufacturing costs and also providing a greater flexibility in design, thereby allowing designers greater freedom.

### SUMMARY OF THE INVENTION

The invention provides a method for manufacturing a vehicle door frame containing the features of claim 1.

In this method the elongated member can be easily bent, during the bending process, over the length where the slit has been provided in the slit forming process. A bent portion may therefore be formed in a single step without the need for bending the elongated member in stages. In addition, the magnitude of the force applied during bending need not be changed because the bent portion is formed in a single step performed by a single bender. Thus, the bending process is simplified and as a result manufacturing costs can be reduced.

The length of the slit provided in the slit forming process is preferably the same length as, and is positioned at, the outer surface of the hollow main body along the bent portion. The part of the connecting portion and the flange portion positioned outside of the slit are separated from the part of the connecting member and the hollow main body positioned inside of the slit, and the flange portion and the connecting member along the rest of the length of the elongated member remain integrated with the hollow main body. The notch portion is formed by cutting the flange portion at each end of the bent portion, specifically by cuts from each end of the slit to the outer edge of the flange portion so that the part of the connecting portion and the flange portion positioned outside the slit are trimmed off. Thus, the notch portion is formed easily.

According to another aspect of the current invention a vehicle door frame including an elongated member, formed by extrusion or roll forming, having a hollow main body, a connecting portion extending from the hollow main body, a flange portion extending from the connecting portion and a plurality of bent portions formed in the longitudinal direction of the elongated member is characterized in that at least one of the bent portions is formed, by the above method, at, or close to, one of the longitudinal end portions of the elongated member and in such a manner that the flange portion is the outer part of said bent portion; said bent portion being such that its radius of curvature is smaller than the limiting radius of curvature at which a bent portion formed by conventional means would experience fracture of the flange portion.

As a bent portion with a small radius of curvature can be formed at the end portion of an elongated member a vehicle door frame with a complicated form can be manufactured. Thus, freedom in the design of the vehicle door frames is enhanced.

### BRIEF DESCRIPTION OF THE DRAWINGS

The foregoing and additional features and characteristics of the present invention will become more apparent from the following detailed description considered with reference to the accompanying drawings, wherein:
Fig. 1 is a flow chart illustrating a method for manufacturing the vehicle door frame in an embodiment of the present invention;
Fig. 2 is an enlarged perspective view of a section of an elongated member in an embodiment of the present invention;
Fig. 3 is a front view of the elongated member shown in Fig. 2 which has undergone the liner inserting process of Fig. 1;
Fig. 4 is an enlarged perspective view of a section of the elongated member shown in Fig. 2 which has undergone the slit forming process of Fig. 1;
Fig. 5 is a front view of the elongated member shown in Fig. 2 which has undergone the bending process of Fig. 1;
Fig. 6 is a front view of the elongated member in Fig.2 which has undergone the notch portion forming process of Fig. 1;
Fig. 7 is a front view of the elongated member in Fig. 2 which has undergone the vehicle door frame finishing process of Fig. 1;
Fig. 8 (A) is a front view of a vehicle door frame including a bent portion at approximately the centre of the elongated member in the longitudinal direction; and
Fig. 8 (B) is a front view of two vehicle door frames which each include a bent portion at one end of the elongated member in the longitudinal direction.

### DETAILED DESCRIPTION

An embodiment of the present invention will be explained hereinbelow referring to attached drawings.

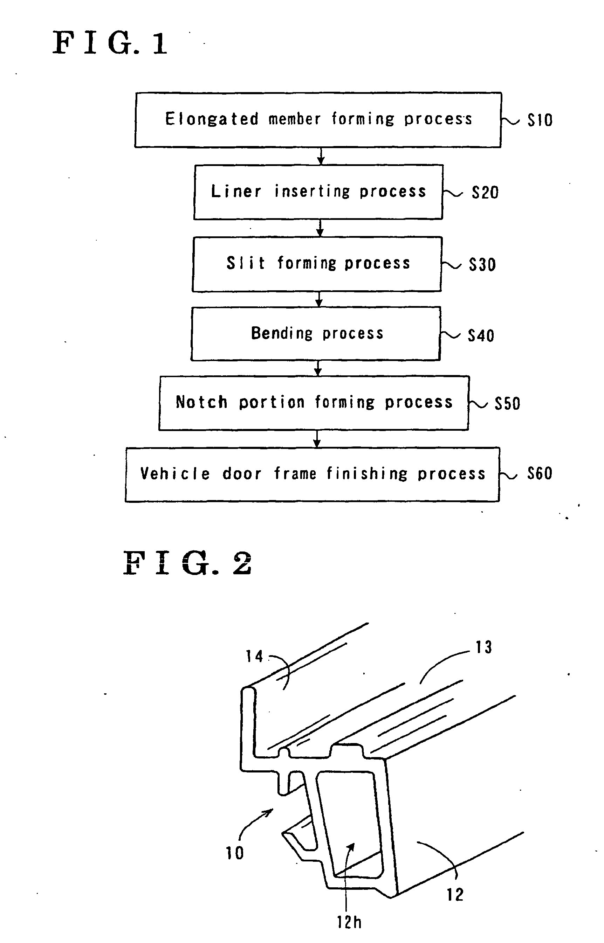

As shown in Fig. 1, firstly an elongated member 10 is formed in an elongated member forming process S10 (elongated member forming step). Specifically, the elongated member 10, with a predetermined form in cross section as shown in Fig. 2, may be formed by extruding a light-alloy or metal, such as aluminum, by means of an extruder. The elongated member 10 includes a hollow main body 12, a connecting portion 13 and a flange portion 14. The hollow main body 12 includes a hollow 12h at the centre thereof, and the flange portion 14, which extends in upper direction in Fig. 2, is integrally connected to the hollow main body 12 by the connecting portion 13 which is formed therebetween. Thus, an elongated member 10 comprising a hollow main body 12, a connecting portion 13 and a flange portion 14 is integrally formed at the elongated member forming process S10.

When the elongated member 10 is made of steel it may be formed by means of roll forming so that it has the same aforementioned form in cross section.

Secondly in the liner inserting process S20 (liner inserting step) in Fig. 1 a liner 20, formed separately to the elongated member, is inserted into the hollow 12h of the hollow main body 12 at a predetermined position where a bent portion 10a is going to be formed. The liner 20 acts as reinforcement to the hollow main body 20 when the elongated member 10 is bent so that it keeps the same cross sectional shape. Furthermore, the liner 20 is inserted within the elongated member 10 so that its centre in the longitudinal direction is positioned where the apex of the bent portion 10a to be formed will be.

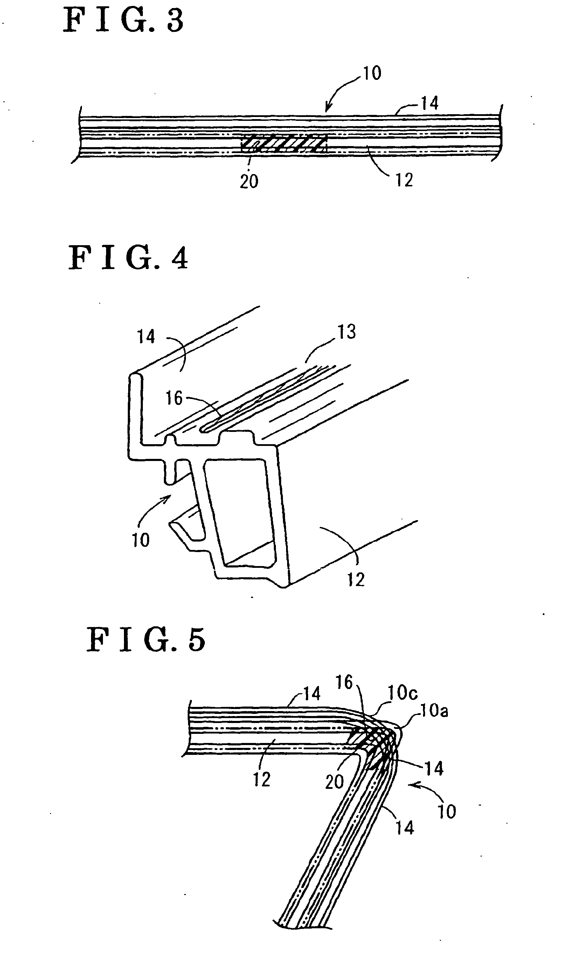

In the slit forming process S30 (slit forming step), a roll which will form the slit in the elongated member 10 is attached to a roll forming machine (not shown). The elongated member 10 is then inserted into the roll forming machine so as to form a through slit 16 in the connecting member 13 provided between the hollow main body 12 and the flange portion 14 of the elongated member 10 as shown in Fig. 4. The slit 16 through the elongated member 10 is formed along that portion of the length of the elongated member which is subsequently formed into the bent portion in the bending process.

Alternatively a laser machine or a pressing machine may be used to form the slit 16.

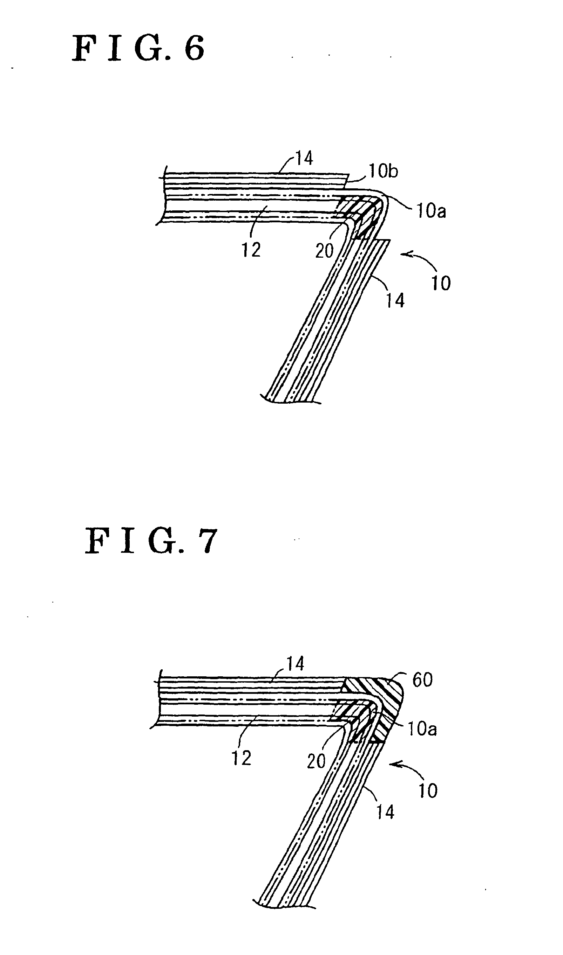

Then, in the bending process S40 (bending step), the elongated member 10 is pressed around a bending form (not shown) with a small radius of curvature by a force applied to the elongated member 10 either side of the portion to be bent. Thus, a bent portion 10a with a small radius of curvature is formed in the elongated member 10 in the portion where the liner 20 was previously inserted, the bend being alongside the slit 16 which was formed in the connecting portion 13 between the hollow main body 12 and the flange portion 14. Therefore only the hollow main body 12 and the part of the connecting portion 13 radially inwardly of the slit 16 will have been bent to fit the shape of the bender. Thus, the elongated member 10 can be bent in a single stage to a small radius of curvature at the portion where the slit 16 is formed, the radius of curvature of the bent portion can be, for example, 20 to 50mm. In the embodiment of the invention shown in figures 5 to 7 the radius of curvature of the bent portion 10a is set to be 40 mm. The magnitude of the force applied to the elongated member 10 in the bending process is limited to be below the limit at which the material of the elongated member 10 away from the bent portion would be elongated.

After the bending process the length of the slit 16 is the longitudinal length of the outer surface of the bent portion 10a of the hollow main body 12 of the elongated member 10. The flange portion 14 and the part of the connecting portion 13 positioned outside of the slit 16 are separated from the part of the connecting member 13 positioned inside the slit 16 and the hollow main body 12. The connecting member 13 and the flange portion 14 remaining integrated with the hollow main body 12 over the rest of the length of the elongated member 10.

When the part of the elongated member 10 inside the slit 16 is formed into the bent portion with a small radius of curvature 10a the connecting portion and the part of the flange portion 14 positioned outside of the slit 16 are also bent and form a separate bent portion 10c with a large radius of curvature. The radius of curvature of this bent portion 10c is more than the limiting radius of curvature at which fracture of the flange portion 14 would occur and the radius of curvature of the bent portion 10a is less than the same limiting radius of curvature.

Then, in a notch portion forming process S50 (notch portion forming step), a notch portion 10b is formed by trimming off the part of the flange portion 14 and the connecting portion 13 positioned outside of the slit 16. Specifically, the notch portion 10b can be formed by cutting off the flange portion 14 and connecting portion 13 positioned outside of the slit 10c, in other words, by cutting from each end of the slit 16 to the outer edge of the flange portion 14 so that the part of the connecting portion 13 and the flange portion 14 positioned outside the slit 16 are trimmed off. Thus, the notch portion 10b is formed easily

Then, in a vehicle door frame finishing process S60 (vehicle door frame finishing step), a bracket 60 whose shape in cross section is identical with the cross sectional shape of the portion of the elongated member 10 that has been trimmed off is attached by welding or similar means to fill the notch portion 10b of the elongated member 10. In this manner a vehicle door frame is manufactured.

According to the method for manufacturing a vehicle door frame of this embodiment, the elongated member 10 is bent in a single stage, unlike the known manufacturing method in which the elongated member 10 is bent in successive stages. Furthermore in this embodiment of the invention the amount force applied during bending need not be changed as the bending process S40 is performed by a single bender in a single step. In this way, as a simpler bending process S40 is provided, the manufacturing cost can be reduced.

In this way, according to the embodiment of the present invention, a bent portion 10a with a small radius of curvature can be formed with a reduced production cost.

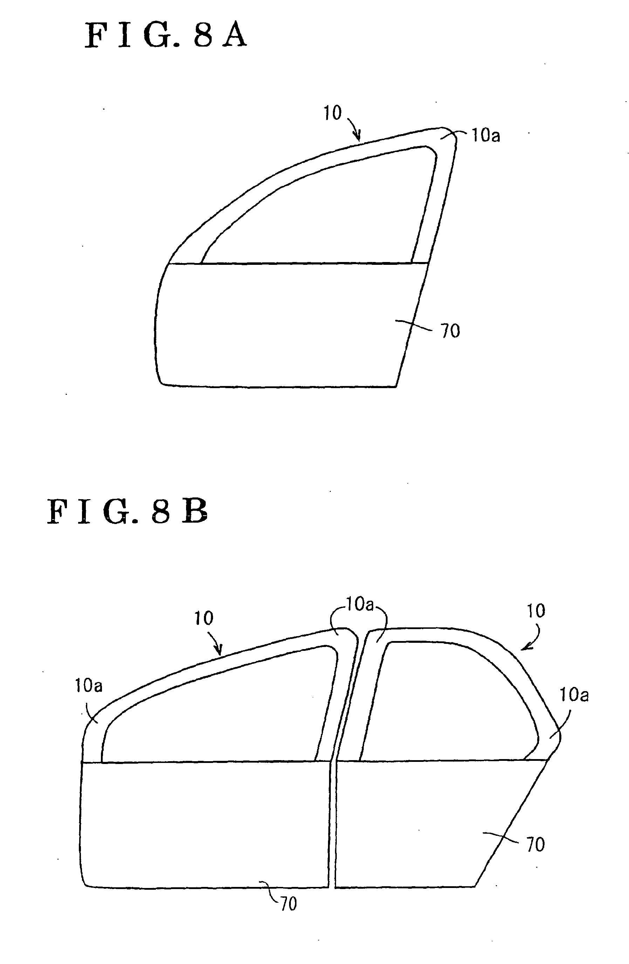

Figs. 8(A) and (B) illustrate examples of vehicle door frames manufactured by the above embodiment of the present invention.

The door frame in Fig. 8(A) includes a gentle curve extending from the left side toward the upper right and a bent portion 10a with a small radius of curvature formed at what was approximately the longitudinal centre portion of the elongated member 10 as it was before it was subject to any bending processes. Such a vehicle door frame is normally situated at the front of the side of a vehicle body 70.

Additional examples of vehicle door frames are shown in Fig. 8(B). Both door frames include a bent portion 10a with a small radius of curvature formed at what was approximately the longitudinal centre of each elongated member 10 as it was before it was subject to any bending processes. Furthermore there is another bent portion 10a formed in each door at one end of each elongated member 10. In this manner, each elongated member 10 includes a plurality of bent portions 10a in the longitudinal direction of the elongated member 10.

In such vehicle door frames, slits 16 will have been formed in the elongated members 10 in a position such that the bent portions 10a with a small radius of curvature can be provided. This is possible even at the end portion of an elongated member 10 because there is no need to hold the elongated member 10 at significant distances from the bent portion being formed during any bending process.

Furthermore, the radius of curvature of the bent portions 10a provided at the ends of the elongated members 10 are smaller than the radius of curvature which would have caused fracture of the flange portion 14 had the elongated member 10 been bent by conventional means.

As mentioned above, a vehicle door frame with a complicated form can be manufactured because bent portions 10a with a small radius of curvature can be formed at the end portion of an elongated member 10. Thus, freedom in design of door frames is enhanced by such a manufacturing method and a flexibility in the design of door frames may be implemented.

## Claims

1. A method for manufacturing a vehicle door frame, said vehicle door frame including an elongated member (10) formed with a plurality of bent portions in the longitudinal direction of the elongated member (10) and having a hollow main body (12), a connecting portion (13) extending from the hollow main body (12) and a flange portion (14) extending from the connecting portion (13) **characterized in that** the method comprises the steps of:
an elongated member forming step (S10) for forming the elongated member (10) in which the hollow main body (12), the connecting portion (13) and the flange portion (14) are formed integrally;
a liner inserting step (S20) for inserting a liner (20) into the hollow main body (12) of the elongated member (10) at a predetermined position thereof after the elongated member forming step (S10);
a slit forming step (S30) for forming a slit (16) in the connecting portion (13) at the same predetermined position after the elongated member forming step (S10);
a bending step (S40) for forming a bent portion (10a) by bending the elongated member (10) after the slit forming step (S30) and after the liner inserting step (S20);
a notch portion forming step (S50) for forming a notch portion (10b) by trimming off a part of the flange portion (14) and the connecting portion (13) positioned outside of the slit (16) after the bending step (S40), and
a vehicle door frame finishing step (S60) for finishing the vehicle door frame by fixing a bracket (60) into the notch portion (10b) of the elongated member (10) after the notch portion forming step (S50).

2. A method for manufacturing a vehicle door frame according to Claim 1, wherein the length of the slit (16) formed in the slit forming step (S30) is the same as the length of the outer surface of the hollow main body (12) of the bent portion (10a).

3. A method for manufacturing a vehicle door frame according to either preceding claim wherein the liner inserting step further includes a positioning step for positioning the liner (20) in the elongated member (10) so that the centre portion thereof is at the point of the elongated member (10) which becomes the apex of the bent portion (10a) subsequently formed in the elongated member (10) during the bending process (S40).

4. A method for manufacturing a vehicle door frame according to any preceding claim wherein the elongated member forming step (S10) includes forming the elongated member by extrusion or roll forming.

5. A method for manufacturing a vehicle door frame according to any preceding claim wherein the slit forming step (S30) further includes a step for forming the slit (16) at the connecting portion (13) by roll forming.

6. A method for manufacturing a vehicle door frame according to any of claims 1 to 4 wherein the slit forming step (S30) further includes a step for forming the slit (16) at the connecting portion (13) by a laser machine or pressing.

7. A method for manufacturing a vehicle door frame according to any preceding claim wherein the bending step (S40) further includes a forming step for forming the bent portion (10a) by bending the elongated member (10) with force applied thereto.

8. A method for manufacturing a vehicle door frame according to Claim 7 wherein the bending step (S40) further includes a step for forming the bent portion (10a) by bending the elongated member (10) with force applied thereto which does not stretch the elongated member (10).

9. A vehicle door frame including an elongated member (10), formed by extrusion or roll forming, having a hollow main body (12), a connecting portion (13) extending from the hollow main body (12), a flange portion (14) extending from the connecting portion (13) and a plurality of bent portions formed in the longitudinal direction of the elongated member (10) **characterized in that** at least one of the bent portions is formed, by the method in any of the preceding claims, at, or close to, one of the longitudinal end portions of the elongated member (10) and in such a manner that the flange portion is the outer part of said bent portion; said bent portion being such that its radius of curvature (10a) is smaller than the limiting radius of curvature at which a bent portion formed by conventional means would experience fracture of the flange portion (14).

10. A vehicle door frame according to Claim 9, wherein the radius of curvature of the bent portion (10a) formed at the longitudinal end portion of the elongated member (10) is set to be from 20 mm to 50 mm.

## Patentansprüche

1. Verfahren zum Herstellen eines Fahrzeugtürrahmens, wobei der Fahrzeugtürrahmen ein langgestrecktes Element (10) enthält, das mit einer Mehrzahl an gebogenen Bereichen in der Längsrichtung des langgestreckten Elements (10) ausgebildet ist und einen hohlen Hauptkörper (12), einen Verbindungsbereich (13), der sich von dem hohlen Hauptkörper (12) aus erstreckt, und einen Flanschbereich (14), der sich von dem Verbindungsbereich (13) aus erstreckt, aufweist, **dadurch gekennzeichnet, dass** das Verfahren die Schritte enthält:
einen langgestrecktes Element-Ausbildungsschritt (S 10) zum Ausbilden des langgestreckten Elements (10), bei dem der hohle Hauptkörper (12), der Verbindungsbereich (13) und der Flanschbereich (14) integral geformt werden;
einen Auskleidungseinführungsschritt (S20) zum Einführen einer Auskleidung (20) in den hohlen Hauptkörper (12) des langgestreckten Elements (10) in einer vorgegebenen Position davon nach dem langgestrecktes Element-Ausbildungsschritt (S 10);
einen Schlitzausbildungsschritt (S30) zum Ausbilden eines Schlitzes (16) in dem Verbindungsbereich (13) in der gleichen vorbestimmten Position nach dem langgestrecktes Element-Ausbildungsschritt (S 10);
einen Biegeschritt (S40) zum Ausbilden eines gebogenen Bereichs (10a) durch Biegen des langgestreckten Elements (10) nach dem Schlitzausbildungsschritt (S30) und nach dem Auskleidungseinführungsschritt (S20);
einen Kerbenbereichausbildungsschritt (S50) zum Ausbilden eines Kerbenbereichs (10b) durch Abschneiden eines Teils des Flanschbereichs (14) und des Verbindungsbereichs (13), der außerhalb des Schlitzes (16) positioniert ist, nach dem Biegeschritt (S40), und
einen Fahrzeugtürrahmenendbearbeitungsschritt (S60) zum Fertigstellen des Fahrzeugtürrahmens durch Befestigen einer Klammer (60) in den Kerbenbereich (10b) des langgestreckten Elements (10) nach dem Kerbenbereichausbildungsschritt (S50).

2. Verfahren zur Herstellung eines Fahrzeugtürrahmens nach Anspruch 1, wobei die Länge des Schlitzes (16), der in dem Schlitzausbildungsschritt (S30) geformt wird, die gleiche wie die Länge der Außenoberfläche des hohlen Hauptkörpers (12) des gebogenen Bereichs (10a) ist.

3. Verfahren zum Herstellen eines Fahrzeugtürrahmens nach einem der vorhergehenden Ansprüche, wobei der Auskleidungseinführungsschritt weiter einen Positionierschritt zum Positionieren der Auskleidung (20) in dem langgestreckten Element (10) enthält, so dass der Zentrumsbereich davon an dem Punkt des langgestreckten Elements (10) ist, der der Scheitel des gebogenen Bereichs (10a) wird, der nachfolgend in dem langgestreckten Element (10) während des Biegevorgangs (S40) geformt wird.

4. Verfahren zum Herstellen eines Fahrzeugtürrahmens nach einem der vorhergehenden Ansprüche, wobei der langgestrecktes Element-Ausbildungsschritt (S 10) das Ausbilden des langgestreckten Elements durch Extrusions- oder Rollformen enthält.

5. Verfahren zum Herstellen eines Fahrzeugtürrahmens nach einem der vorhergehenden Ansprüche, wobei der Schlitzausbildungsschritt (S30) weiter einen Schritt zum Ausbilden des Schlitzes (16) an dem Verbindungsbereich (13) durch Rollformen enthält.

6. Verfahren zum Herstellen eines Fahrzeugtürrahmens nach einem der Ansprüche 1 bis 4, wobei der Schlitzausbildungsschritt (S30) weiter einen Schritt zum Ausbilden des Schlitzes (16) an dem Verbindungsbereich (13) durch eine Lasermaschine oder Pressen enthält.

7. Verfahren zum Herstellen eines Fahrzeugtürrahmens nach einem der vorhergehenden Ansprüche, wobei der Biegeschritt (S40) weiter einen Ausbildungsschritt zum Formen des gebogenen Bereichs (10a) durch Biegen des langgestreckten Elements (10) mit einer darauf aufgebrachten Kraft enthält.

8. Verfahren zum Herstellen eines Fahrzeugtürrahmens nach Anspruch 7, wobei der Biegeschritt (S40) weiter einen Schritt zum Ausbilden des Biegebereichs (10a) durch Biegen des langgestreckten Elements (10) mit darauf aufgebrachter Kraft enthält, die das langgestreckte Element (10) nicht dehnt.

9. Fahrzeugtürrahmen, enthaltend ein langgestrecktes Element (10), das durch Extrusions- oder Rollformen gebildet ist, das einen hohlen Hauptkörper (12), einen Verbindungsbereich (13), der sich von dem hohlen Hauptkörper (12) aus erstreckt, einen Flanschbereich (14), der sich von dem Verbindungsbereich (13) aus erstreckt, und eine Mehrzahl an gebogenen Bereichen, die in der Längsrichtung des langgestreckten Elements (10) geformt sind, enthält, **dadurch gekennzeichnet, dass** zumindest einer der gebogenen Bereiche durch das Verfahren nach einem der vorhergehenden Ansprüche an oder nahe bei einem der Endbereiche in Längsrichtung des langgestreckten Elements (10) geformt ist und so, dass der Flanschbereich der äußere Teil des gebogenen Bereichs ist; wobei der gebogene Bereich derart ist, dass sein Krümmungsradius (10a) kleiner als der Grenzkrümmungsradius ist, bei dem ein gebogener Bereich, der durch ein herkömmliches Mittel ausgebildet ist, einen Bruch des Flanschbereichs (14) erfahren würde.

10. Fahrzeugtürrahmen nach Anspruch 9, wobei der Krümmungsradius des gebogenen Bereichs (10a), der an dem Endbereich in Längsrichtung des langgestreckten Elements (10) geformt ist, festgelegt ist, dass er von 20 mm bis 50 mm ist.

## Revendications

1. Procédé pour fabriquer un châssis de porte de véhicule, ledit châssis de porte de véhicule comprenant un élément allongé (10) formé avec une pluralité de parties cintrées dans la direction longitudinale de l'élément allongé (10) et ayant un corps principal creux (12), une partie de raccordement (13) s'étendant à partir du corps principal creux (12) et une partie de rebord (14) s'étendant à partir de la partie de raccordement (13) **caractérisé en ce que** le procédé comprend :
une étape de formation d'élément allongé (S10) consistant à former l'élément allongé (10) dans lequel le corps principal creux (12), la partie de raccordement (13) et la partie de rebord (14) sont formés de manière solidaire ;
une étape d'insertion de revêtement (S20) consistant à insérer un revêtement (20) dans le corps principal creux (12) de l'élément allongé (10) au niveau de sa position prédéterminée après l'étape de formage d'élément allongé (S10) ;
une étape de formation de fente (S30) consistant à former une fente (16) dans la partie de raccordement (13) à la même position prédéterminée après l'étape de formation d'élément allongé (S10) ;
une étape de cintrage (S40) consistant à former une partie cintrée (10a) en cintrant l'élément allongé (10) après l'étape de formation de fente (S30) et après l'étape d'insertion de revêtement (S20) ;
une étape de formation de partie d'encoche (S50) consistant à former une partie d'encoche (10b) en découpant une partie de la partie de rebord (14) et de la partie de raccordement (13) positionnée à l'extérieur de la fente (16) après l'étape de cintrage (S40) ; et
une étape de finition de châssis de porte de véhicule (S60) consistant à finir le châssis de porte de véhicule en fixant une console (60) dans la partie d'encoche (10b) de l'élément allongé (10) après l'étape de formation de partie d'encoche (S50).

2. Procédé pour fabriquer un châssis de porte de véhicule selon la revendication 1, dans lequel la longueur de la fente (16) formée dans l'étape de formation de fente (S30) est la même que la longueur de la surface externe du corps principal creux (12) de la partie cintrée (10a).

3. Procédé pour fabriquer un châssis de porte de véhicule selon chacune des revendications précédentes, dans lequel l'étape d'insertion de revêtement comprend une étape de positionnement consistant à positionner le revêtement (20) dans l'élément allongé (10) de sorte que sa partie centrale est à la pointe de l'élément allongé (10) qui devient le sommet de la partie cintrée (10a) formée ensuite dans l'élément allongé (10) pendant le procédé de cintrage (S40).

4. Procédé pour fabriquer un châssis de porte de véhicule selon l'une quelconque des revendications précédentes, dans lequel l'étape de formation d'élément allongé (S10) comprend l'étape consistant à former l'élément allongé par extrusion ou formage aux galets.

5. Procédé pour fabriquer un châssis de porte de véhicule selon l'une quelconque des revendications précédentes, dans lequel l'étape de formation de fente (S30) comprend en outre une étape consistant à former la fente (16) au niveau de la partie de raccordement (13) par formage aux galets.

6. Procédé pour fabriquer un châssis de porte de véhicule selon l'une quelconque des revendications 1 à 4, dans lequel l'étape de formation de fente (S30) comprend en outre une étape consistant à former la fente (16) au niveau de la partie de raccordement (13) par usinage au laser ou pressage.

7. Procédé pour fabriquer un châssis de porte de véhicule selon l'une quelconque des revendications précédentes, dans lequel l'étape de cintrage (S40) comprend en outre une étape de formation consistant à former la partie cintrée (10a) en cintrant l'élément allongé (10) avec une force appliquée sur celui-ci.

8. Procédé pour fabriquer un châssis de porte de véhicule selon la revendication 7, dans lequel l'étape de cintrage (S40) comprend en outre une étape consistant à former la partie cintrée (10a) en cintrant l'élément allongé (10) avec une force appliquée sur celui-ci qui n'étire pas l'élément allongé (10).

9. Châssis de porte de véhicule comprenant un élément allongé (10) formé par extrusion ou formage aux galets, ayant un corps principal creux (12), une partie de raccordement (13) s'étendant à partir du corps principal creux (12), une partie de rebord (14) s'étendant à partir de la partie de raccordement (13) et une pluralité de parties cintrées formées dans la direction longitudinale de l'élément allongé (10), **caractérisé en ce qu'**au moins l'une des parties cintrées est formée, par le procédé selon l'une quelconque des revendications précédentes, au niveau de ou à proximité de l'une des parties d'extrémité longitudinale de l'élément allongé (10) et de sorte que la partie de rebord est la partie externe de ladite partie cintrée ; ladite partie cintrée étant telle que son rayon de courbure (10a) est plus petit que le rayon de courbure de limite auquel une partie cintrée formée par des moyens classiques subirait la fracture de la partie de rebord (14).

10. Châssis de porte de véhicule selon la revendication 9, dans lequel le rayon de courbure de la partie cintrée (10a) formé au niveau de la partie d'extrémité longitudinale de l'élément allongé (10) est déterminé pour être de l'ordre de 20 mm à 50 mm.
